# FASCICULE DE BREVET EUROPEEN

(11) **EP 1 066 994 B1**
(45) Date de publication et mention de la délivrance du brevet: **21.05.2003**
(21) Numéro de dépôt: 00401878.4
(22) Date de dépôt: 30.06.2000
(51) Int. Cl.: B60G 17/02, B60G 21/05, B60G 7/02, B60G 11/12, B60G 11/44, F16F 1/368

(54) **Suspension arrière d'un véhicule automobile**
Hinterradaufhängung für ein Kraftfahrzeug
Rear suspension of a motor vehicle

(30) Priorité: 05.07.1999 FR 9908614
(43) Date de publication de la demande: 10.01.2001
(73) Titulaire: Matra Automobile, 75016 Paris (FR)
(72) Inventeur: Bardot, Michel, 78370 Plaisir (FR)
(74) Mandataire: Le Bras, Hervé

(56) Documents cités:
- EP-A- 0 595 421
- WO-A-87/01078
- WO-A-97/12773
- DE-A- 2 456 793
- DE-A- 3 122 417
- DE-A- 3 141 133
- FR-A- 2 581 594
- PATENT ABSTRACTS OF JAPAN vol. 016, no. 270 (M-1266), 17 juin 1992 (1992-06-17) & JP 04 066314 A (TOYOTA MOTOR CORP), 2 mars 1992 (1992-03-02)
- PATENT ABSTRACTS OF JAPAN vol. 016, no. 452 (M-1313), 21 septembre 1992 (1992-09-21) & JP 04 159110 A (TOYOTA MOTOR CORP), 2 juin 1992 (1992-06-02)

## Description

L'invention se rapporte à un train arrière pour véhicule automobile, selon le préambule de la revendication 1.

Le rôle du profil déformable en torsion et très rigide en flexion est d'assurer le roulis du véhicule.

Un tel train arrière est connu notamment par les documents FR A 2 662 643 et FR A 2 666 279 qui servent de base pour la présentation en deux parties de la revendication 1. Dans ces deux documents, l'essieu est articulé à sa partie avant par des axes situés à l'extrémité avant des bras sur des paliers fixés sous la caisse du véhicule. Ces paliers immobilisent également les extrémités avant des lames de ressort. Ces paliers supportent au niveau des articulations tous les efforts transmis par le train arrière à la caisse, c'est-à-dire notamment les efforts transversaux subis par les roues et les efforts longitudinaux de freinage. Les lames de ressort, quant à elles, n'assurent que la fonction de suspension des roues, et sont soumises à des efforts verticaux variables en fonction de l'état de la chaussée et de la charge du véhicule, les couples résultant de ces efforts étant repris par les paliers qui doivent donc être des pièces robustes réalisées, par exemple, en métal coulé ou en tôle d'acier soudée de forte épaisseur.

Du fait que l'essieu est fixé à la caisse par deux axes transversaux et coplanaires, le profil reste sensiblement parallèle à ces axes, quel que soit l'effort de torsion subi.

Cette construction nécessite de prévoir, sur les bras, des joues dans lesquelles sont ménagés des alésages pour le passage des axes d'articulation, et la fabrication de paliers robustes.

Dans EP 0 595 421, l'essieu est relié au châssis par des barres de traction élastiquement déformables dans un plan horizontal, et rigides dans le sens vertical. Ces barres de traction ne peuvent assurer seules la suspension.

L'invention s'est donné pour but de proposer un train arrière, tel que mentionné en introduction, dans lequel les articulations de l'essieu sur la caisse sont supprimées.

L'invention s'est également donné pour but de proposer un train arrière dans lequel le profil reliant les bras ait un degré de liberté supplémentaire par rapport au châssis, avec un gain d'encombrement, une architecture simplifiée, un gain de poids et un coût diminué.

Le but est atteint selon l'invention, par un train arrière selon la revendication 1.

Selon un mode de réalisation simplifié de l'invention, les extrémités de chaque lame sont rigidement fixées sur les brides, lesquelles sont respectivement fixées sous la caisse et dans le bras correspondant.

Selon un mode de réalisation préférentiel de l'invention, les extrémités de chaque lame sont rigidement fixées sur des brides, l'une des brides étant rigidement fixée à l'un des éléments, caisse ou bras correspondant, et l'autre bride étant fixée à l'autre desdits éléments au moyen d'une articulation élastique dont l'axe est dans un plan horizontal, ledit autre élément comportant en outre un patin en appui sur la face supérieure de ladite lame.

L'articulation élastique permet de filtrer les vibrations transmises par les roues.

Avantageusement, le patin présente une surface d'appui convexe afin de régler la raideur de ladite lame.

De préférence, l'articulation élastique comporte une broche solidaire de l'autre desdits éléments, bras correspondant ou caisse, qui loge dans un alésage traversant ménagé à l'extrémité correspondante de la lame, avec interposition d'un manchon en élastomère qui assure le filtrage des vibrations et le déport éventuel de la caisse par rapport à l'essieu.

Selon une autre caractéristique de ce mode préféré de réalisation, les axes des deux broches sont inclinés par rapport à la direction transversale définie par les deux articulations dans un plan horizontal et se coupent dans le plan médian du véhicule.

De préférence, les axes des broches sont inclinées de manière à se couper en un point 0 du côté avant du véhicule par rapport aux articulations.

De préférence, les perpendiculaires aux axes des broches dans le plan horizontal, se coupent en un point 01 à l'arrière de l'axe de rotation des roues.

Les articulations présentent alors selon leurs axes longitudinaux une grande flexibilité et, suivant la direction perpendiculaire, une faible flexibilité.

Ces caractéristiques permettent lors du déport de la caisse dans un virage, sous l'effet de la force centrifuge, de faire pivoter très légèrement l'essieu dans le sens du virage, c'est-à-dire dans le même sens que les roues directrices.

L'angle d'inclinaison de l'axe de chaque broche par rapport à la direction transversale dépend de la géométrie du train.

Les lames sont réalisées de préférence en matériau composite.

D'autres avantages et caractéristiques de l'invention ressortiront à la lecture de la description suivante faite à titre d'exemple et en référence aux dessins annexés dans lesquels :
la figure 1 est une vue en perspective de la partie arrière d'un châssis de véhicule sur lequel est monté un train arrière de suspension de roues selon un mode simplifié de réalisation de l'invention ;
la figure 2 est une vue de dessus du train arrière de la figure 1 ;
la figure 3 est une vue en coupe selon la ligne III-III de la figure 2 ;
la figure 4 est une vue latérale de la partie arrière du châssis et du train arrière ;
la figure 5 est une vue de dessus, partiellement arrachée, d'un train arrière de suspension selon un mode préféré de réalisation ;
la figure 6 est une coupe selon un plan vertical passant par la ligne VI-VI de la figure 5 ;
la figure 7 montre la configuration du véhicule lorsqu'elle avance en ligne droite ; et
la figure 8 montre la configuration du train arrière lorsque le véhicule tourne à droite, les lignes en pointillées montrant la configuration du train arrière, en l'absence d'articulations élastiques obliques à l'une des extrémités des lames.

Dans les deux modes de réalisation décrits ci-dessus, les éléments identiques portent les mêmes références.

La référence 1 représente le châssis arrière d'un véhicule qui comporte une traverse 2 reliant un longeron 3a disposé à droite du véhicule et un longeron 3b disposé à gauche, la droite et la gauche étant définies par rapport au sens de déplacement normal vers l'avant du véhicule.

La référence 4 représente le train arrière du véhicule. Ce train arrière comporte un essieu 5 constitué par deux bras tirés, 6a à droite et 6b à gauche, reliés à leur extrémité avant par un profil 6 déformable en torsion et très rigide en flexion. Les bras tirés 6a et 6b comportent à leur extrémité arrière des moyens 7a, 7b pour la fixation des fusées des roues arrière 8a et 8b, ainsi que des moyens 9a, 9b pour la fixation de l'extrémité inférieure d'amortisseurs 10a, 10b dont les extrémités supérieures sont ancrées sur les longerons 3a, 3b ou sur des prolongements des longerons 3a, 3b, qui s'étendent à l'arrière de la traverse 2.

L'essieu 4 est réalisé en métal de manière traditionnelle. Le profil 6 présente de préférence une section en U ouverte vers l'arrière et les bras 6a et 6b comportent une ouverture vers l'avant.

La fixation de l'essieu 4 sur le châssis 1 est réalisée au moyen de deux lames de ressort 11a et 11b, réalisées de préférence en matériau composite, mais qui pourraient également être des lames de ressort en acier. L'intérêt de lames en matériau composite est de permettre le filtrage des vibrations transmises par les roues 8a et 8b au cours de leur roulement sur la chaussée 12. Le rôle des lames 11a et 11b est de réaliser la suspension élastique du châssis 1 et de retenir l'essieu 5 sans la présence d'axes d'articulation entre l'essieu 5 et la traverse 2.

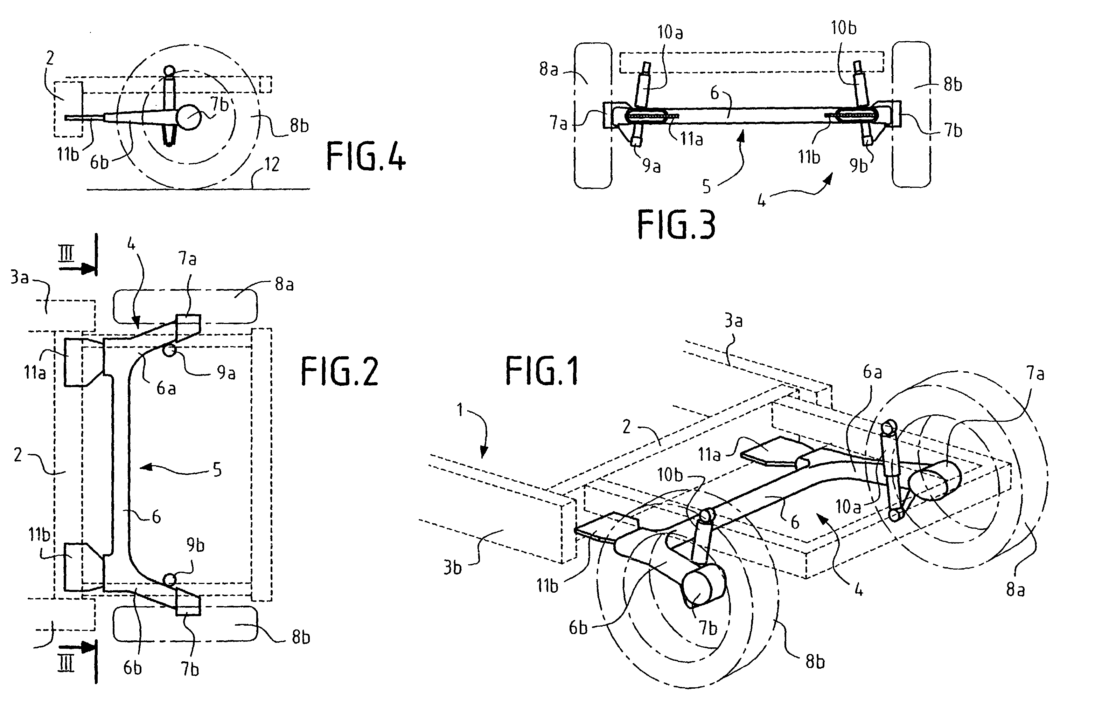

Selon un mode simplifié de réalisation montré sur les figures 1 à 4, chaque lame de ressort 11a et 11b est rigidement fixée par son extrémité arrière à l'intérieur du bras correspondant 6a et 6b au moyen d'une bride et est également rigidement fixée par son extrémité avant dans un logement ménagé dans la traverse 2 au moyen d'une deuxième bride.

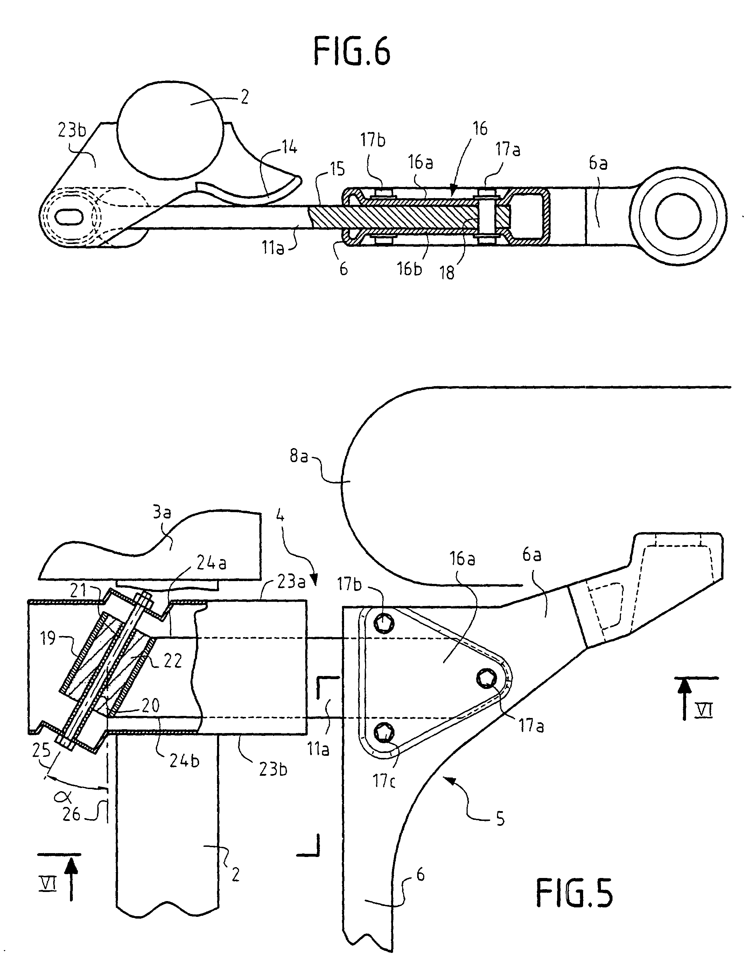

Selon un mode préféré de réalisation montré sur les figures 5 et 6, chaque lame 11a, 11b est rigidement fixée par l'une de ses extrémités soit dans le bras tiré correspondant 6a et 6b, soit sur la traverse 2 au moyen d'une bride et est fixée sur l'autre élément, traverse 2 ou bras tiré correspondant 6a et 6b, au moyen d'une articulation élastique, cet autre élément comportant dans ce cas un patin 14 en appui sur la face supérieure 15 de la lame 11a, 11b.

Comme on le voit sur les figures 5 et 6, l'extrémité arrière des lames 11a et 11b est fixée dans le bras tiré 6a, 6b au moyen d'une bride 16. Cette bride 16 est réalisée par emboutissage des tôles constitutives du bras 6a, 6b et présente deux parois 16a, 16b distantes de l'épaisseur du bras 6a, 6b, dans lesquelles sont ménagés en correspondance trois orifices 17a, 17b, 17c disposés sensiblement en triangle pour le passage de broches de serrage. L'un des orifices 17a est ménagé en correspondance avec un trou traversant 18 prévu à l'extrémité arrière de la lame 6a, 6b. Les deux autres orifices 17b, 17c sont disposés respectivement à droite et à gauche de la lame 6a, 6b.

L'extrémité avant 19 de chaque lame 6a, 6b comporte un trou traversant 20 disposé dans un plan horizontal, dans lequel loge une broche 21 avec interposition d'un manchon en élastomère 22 qui réalise le filtrage des vibrations transmises par la lame 6a, 6b, ainsi que l'articulation élastique. La broche 21 est en appui à ses extrémités sur deux flasques 23a, 23b solidaires de la traverse 2 et qui s'étendent sous cette dernière. Les flasques 23a et 23b sont sans contact avec les bords latéraux 24a, 24b de la lame 6a, 6b correspondante afin de permettre un léger déport du châssis 1 par rapport au train arrière 4 dans les virages sous l'action de la force centrifuge. Le patin 14, qui est en appui sur la face supérieure 15 de la lame correspondante 6a, 6b, est solidaire de la partie arrière des flasques 23a et 23b. Ce patin 14 présente une surface d'appui convexe afin de régler la raideur de la lame 6a, 6b.

Ainsi que cela se voit sur la figure 5, le trou traversant 20 et la broche 22 sont coaxiaux et leur axe commun 25 est situé dans un plan horizontal fait un angle α avec la ligne transversale 26 reliant les points médians 27a, 27b des deux articulations élastiques. La valeur de l'angle α dépend de la géométrie du train arrière 4.

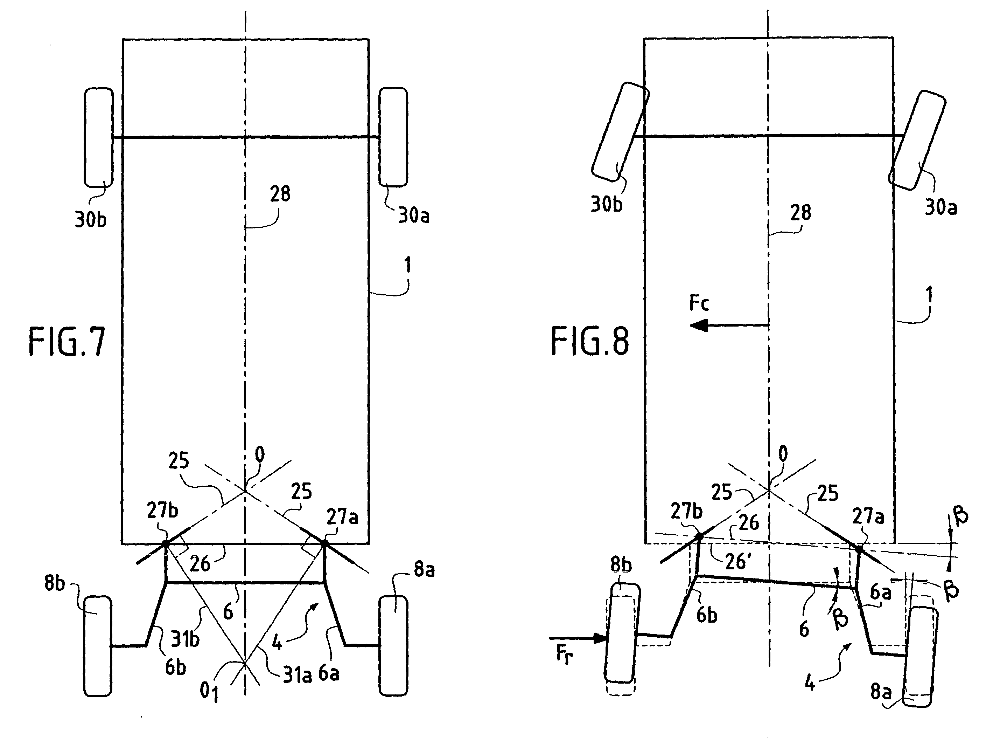

La figure 7 montre la configuration géométrique du train arrière 4 par rapport au châssis 1 en l'absence de forces latérales, de forces centrifuges notamment. Dans cette configuration, la ligne transversale 26 est perpendiculaire à l'axe 28 longitudinal médian du véhicule. Les axes 25 des deux broches 22 sont symétriques par rapport à l'axe 28, et se coupent au point 0 situé sur l'avant du véhicule par rapport à la ligne transversale 26. Les axes horizontaux 31a et 31b perpendiculaires aux axes 25 des deux broches 22 et tirés à partir des points médians 27a et 27b des deux articulations sont symétriques par rapport à l'axe médian 28 du véhicule et se coupent au point 01 situé à l'arrière du véhicule, derrière les axes de rotations des roues arrière 8a, 8b.

Lorsque le véhicule est soumis à une force centrifuge Fc, voir figure 8, par suite d'un virage à droite par exemple, une force opposée Fr est appliquée par la chaussée sur les roues 8a, 8b. Les points médians 27a et 27b se déplacent le long des axes 25 des broches 22, ainsi que cela est montré sur la figure 8, et la ligne transversale 26 s'incline d'un angle β par rapport à sa position antérieure 26'. L'essieu 5 s'incline également d'un angle β par rapport à sa position antérieure. Il en est de même des roues arrière 8a et 8b qui pivotent ainsi légèrement dans le sens du virage, c'est-à-dire dans le même sens que les roues directrices avant 30a et 30b.

## Revendications

1. Train arrière pour véhicule automobile du type comportant un essieu (5) constitué de deux bras tirés (6a, 6b) reliés entre eux par un profil (6) déformable en torsion et très rigide en flexion, des moyens pour monter ledit essieu (5) sous la caisse (2) dudit véhicule comprenant deux lames (11a, 11b) ressort longitudinales logeant en partie dans lesdits bras (6a, 6b) et dont les extrémités coopèrent respectivement avec ladite caisse et lesdits bras (6a, 6b), lesdites deux lames (11a, 11b) étant déformables dans la direction verticale, afin d'assurer la suspension, et rigides dans le sens transversal, **caractérisé par le fait que** les moyens pour monter l'essieu (5) sous la caisse (2) sont constitués uniquement par les amortisseurs (10a, 10b) et leurs moyens de fixation (7a, 7b, 9a, 9b) ainsi que par lesdites lames (11a, 11b), l'une des extrémités de ces dernières étant rigidement fixée à l'un des deux éléments, caisse (2) ou bras (6a, 6b) correspondant, et l'autre extrémité étant fixée, dans un plan horizontal, à l'autre desdits éléments, de manière à supporter au moins les efforts longitudinaux transmis par l'essieu et assurer son guidage.

2. Train arrière selon la revendication 1, **caractérisé par le fait que** les extrémités de chaque lame (11a, 11b) sont rigidement fixées sur des brides, lesquelles sont respectivement fixées sous la caisse (2) et dans le bras (6a, 6b) correspondant.

3. Train arrière selon l'une quelconque des revendications 1 ou 2, **caractérisé par le fait que** les extrémités de chaque lame (11a, 11b) sont rigidement fixées sur des brides, l'une des brides (16) étant rigidement fixée à l'un des éléments, caisse (2) ou bras (6a, 6b) correspondant, et l'autre bride (19) étant fixée à l'autre desdits éléments au moyen d'une articulation élastique (20, 21, 22) dont l'axe est dans un plan horizontal, ledit autre élément comportant en outre un patin (14) en appui sur la face supérieure (15) de ladite lame (11a, 11b).

4. Train arrière selon la revendication 3, **caractérisé par le fait que** le patin (14) présente une surface d'appui convexe afin de régler la raideur de ladite lame.

5. Train arrière selon l'une des revendications 3 ou 4, **caractérisé par le fait que** l'articulation élastique comporte une broche (21) solidaire de l'autre desdits éléments, bras correspondant (6a, 6b) ou caisse (2), qui loge dans un alésage (20) traversant ménagé à l'extrémité correspondante de la lame (11a, 11b), avec interposition d'un manchon (22) en élastomère qui assure le filtrage des vibrations et le déport éventuel de la caisse (2) par rapport à l'essieu (5).

6. Train arrière selon la revendication 5, **caractérisé par le fait que** les axes (25) des deux broches (21) sont inclinés dans le plan horizontal par rapport à la direction transversale (26) définie par les deux articulations et se coupent dans le plan médian du véhicule.

7. Train arrière selon la revendication 6, **caractérisé par le fait que** les axes (25) des broches (21) sont inclinées de manière à se couper en un point 0, du côté avant du véhicule par rapport aux articulations.

8. Train arrière selon la revendication 7, **caractérisé par le fait que** les perpendiculaires (3 la, 31b) aux axes (25) des broches (21), dans un plan horizontal, se coupent en un point 01 à l'arrière de l'axe de rotation des roues (8a, 8b) montées sur ledit essieu.

9. Train arrière selon l'une quelconque des revendications 1 à 8, **caractérisé par le fait que** les lames (11a, 11b) sont réalisées en matériau composite.

## Patentansprüche

1. Hinterradaufhängung für ein Kraftfahrzeug, welche eine Achse (5), die aus zwei gezogenen Armen (6a, 6b) besteht, die durch ein Profil (6) verbunden sind, das durch Torsion verformbar und bei Biegung sehr starr ist, und Mittel für die Anbringung der Achse (5) unter dem Chassis (2) dieses Fahrzeugs umfasst, die zwei Längsfederblätter (11a, 11b) umfassen, die teilweise von den Armen (6a, 6b) aufgenommen werden und deren Enden mit dem Chassis bzw. den Armen (6a, 6b) zusammenwirken, wobei die beiden Federblätter (11a, 11b) in vertikaler Richtung, um die Aufhängung sicherzustellen, verformbar und in Querrichtung starr sind, **dadurch gekennzeichnet, dass** die Mittel für die Anbringung der Achse (5) unter dem Chassis (2) ausschließlich aus den Stoßdämpfern (10a, 10b) und deren Befestigungsmitteln (7a, 7b, 9a, 9b) sowie den Federblättern (11a, 11b) bestehen, von welchen ein Ende starr an einem der zwei Bauteile Chassis (2) bzw. entsprechender Arm (6a, 6b) und das andere Ende in einer horizontalen Ebene an dem anderen dieser Bauteile derart befestigt ist, dass wenigstens die Längskräfte, die von der Achse übertragen werden, aufgenommen werden, und deren Führung sichergestellt wird.

2. Hinterradaufhängung nach Anspruch 1, **dadurch gekennzeichnet, dass** die Enden des jeweiligen Federblattes (11a, 11b) starr an einem Flansch befestigt sind, der unter dem Chassis (2) bzw. im entsprechenden Arm (6a, 6b) befestigt ist.

3. Hinterradaufhängung nach Anspruch 1 oder 2, **dadurch gekennzeichnet, dass** die Enden des jeweiligen Federblattes (11a, 11b) starr an Flanschen befestigt sind, wobei einer der Flansche (16) starr an einem der Bauteile Chassis (2) bzw. entsprechender Arm (6a, 6b) und der andere Flansch (19) am anderen Bauteil mittels eines elastischen Gelenks (20, 21, 22) befestigt ist, dessen Achse sich in einer horizontalen Ebene befindet, und das andere Bauteil außerdem einen Schuh (14) enthält, der auf der Oberseite (15) des Federblattes (11a, 11b) aufliegt.

4. Hinterradaufhängung nach Anspruch 3, **dadurch gekennzeichnet, dass** der Schuh (14) eine konvexe Auflagefläche besitzt, um die Steifigkeit des Federblattes einzustellen.

5. Hinterradaufhängung nach Anspruch 3 oder 4, **dadurch gekennzeichnet, dass** das elastische Gelenk einen Schraubenbolzen (21) enthält, der mit den anderen Bauteilen, entsprechender Arm (6a, 6b) bzw. Chassis (2), fest verbunden ist und sich unter Einlage einer Elastomermuffe (22), welche die Dämpfung der Schwingungen und gegebenenfalls den Versatz des Chassis (2) in Bezug auf die Achse (5) sicherstellt, in einer durchgehenden Bohrung (20) befindet, die im entsprechenden Ende des Federblattes (11a, 11b) angebracht ist.

6. Hinterradaufhängung nach Anspruch 5, **dadurch gekennzeichnet, dass** die Achsen (25) der zwei Schraubenbolzen (21) in der Ebene, die in Bezug auf die von den zwei Gelenken definierte Querrichtung (26) horizontal ist, geneigt sind und sich in der Mittellinie des Fahrzeugs schneiden.

7. Hinterradaufhängung nach Anspruch 6, **dadurch gekennzeichnet, dass** die Achsen (25) der Schraubenbolzen (21) derart geneigt sind, dass sie sich in einem Punkt 0 auf der Seite des Fahrzeugs schneiden, die in Bezug auf die Gelenke vom ist.

8. Hinterradaufhängung nach Anspruch 7, **dadurch gekennzeichnet, dass** die Senkrechten (31a, 31b) zu den Achsen (25) der Schraubenbolzen (21) sich in einer horizontalen Ebene in einem Punkt 01 hinter der Drehachse der an der Achse angebrachten Räder (8a, 8b) schneiden.

9. Hinterradaufhängung nach einem der Ansprüche 1 bis 8, **dadurch gekennzeichnet, dass** die Federblätter (11a, 11b) aus einem Verbundmaterial hergestellt sind.

## Claims

1. Motor vehicle rear axle assembly of the type comprising an axle (5) consisting of two trailing arms (6a, 6b) connected together by a profile (6) that is deformable in torsion and very rigid in bending, means for mounting the said axle (5) under the body (2) of the said vehicle comprising two longitudinal spring leaves (11a, 11b) housed in part in the said arms (6a, 6b) and the ends of which collaborate respectively with the said body and the said arms (6a, 6b), the said two leaves (11a, 11b) being deformable in the vertical direction so as to provide suspension, and rigid in the transverse direction, **characterized in that** the means for mounting the axle (5) under the body (2) consist solely of the shock absorbers (10a, 10b) and their fixing means (7a, 7b, 9a, 9b) and of the said leaves (11a, 11b), one of the ends of the latter being rigidly fixed to one of the two elements, body (2) or corresponding arm (6a, 6b), and the other end being fixed, in a horizontal plane, to the other of the said elements so as to bear at least the longitudinal forces transmitted by the axle and to guide it.

2. Rear axle assembly according to Claim 1, **characterized in that** the ends of each leaf (11a, lib) are rigidly fixed to flanges which are fixed respectively under the body (2) and in the corresponding arm (6a, 6b).

3. Rear axle assembly according to either one of Claims 1 and 2, **characterized in that** the ends of each leaf (11a, 11b) are rigidly fixed to flanges, one of the flanges (16) being rigidly fixed to one of the elements, body (2) or corresponding arm (6a, 6b), and the other flange (19) being fixed to the other of the said elements by means of an elastic articulation (20, 21, 22) the axis of which is in a horizontal plane, the said other element further comprising a shoe (14) resting on the top face (15) of the said leaf (11a, 11b).

4. Rear axle assembly according to Claim 3, **characterized in that** the shoe (14) has a convex bearing surface so as to adjust the stiffness of the said leaf.

5. Rear axle assembly according to one of Claims 3 and 4, **characterized in that** the elastic articulation comprises a pin (21) secured to the other of the said elements, corresponding arm (6a, 6b) or body (2), which is housed in a through bore (20) formed at the corresponding end of the leaf (11a, 11b) with the interposition of an elastomeric sleeve (22) which filters vibrations and possibly offsets the body (2) from the axle (5).

6. Rear axle assembly according to Claim 5, **characterized in that** the axes (25) of the two pins (21) are inclined in the horizontal plane with respect to the transverse direction (26) defined by the two articulations and intersect in the mid-plane of the vehicle.

7. Rear axle assembly according to Claim 6, **characterized in that** the axes (25) of the pins (21) are inclined in such a way as to intersect at a point 0 on the front-of-vehicle side of the articulations.

8. Rear axle assembly according to Claim 7, **characterized in that** the normals (31a, 31b) to the axes (25) of the pins (21) in a horizontal plane intersect at a point 01 behind the axis of rotation of the wheels (8a, 8b) mounted on the said axle.

9. Rear axle assembly according to any one of Claims 1 to 8, **characterized in that** the leaves (11a, lib) are made of composite.
